# EUROPEAN PATENT SPECIFICATION

(11) **EP 3 293 405 B1**
(45) Date of publication and mention of the grant of the patent: **31.07.2019**
(21) Application number: 17187146.0
(22) Date of filing: 21.08.2017
(51) Int. Cl.: F16B 45/02

(54) **CARABINERS**
KARABINER
MOUSQUETONS

(30) Priority: 13.09.2016 GB 201615497
(43) Date of publication of application: 14.03.2018
(73) Proprietor: DMM International Ltd, Llanberis Gwynedd LL55 4EL (GB)
(72) Inventor: Hall, Frederick Allan, Caernarfon, Gwynedd LL55 4EX (GB)
(74) Representative: Hamilton, Alistair

(56) References cited:
- EP-A1- 1 384 497
- US-A1- 2014 361 564

## Description

This invention relates to carabiners. In particular, it relates to carabiners that incorporate a rolling element over which a rope can pass with minimal resistance.

In this discussion, the term "rope" will be used in the interest of concision. However, it should be understood that the considerations will apply not just to a textile rope, but extends also to cable, tape, webbing, and so forth, unless the context requires otherwise.

Carabiners are invariably formed with smooth, curved inner surfaces over which a rope can pass smoothly and easily. However, there are occasions where a heavily loaded rope will experience an undesirable level of sliding friction as it passes over a carabiner, and for this reason, it is known to include a rolling element, such as a cylindrical roller or a sheave, on a carabiner to allow the rope to slide more smoothly. Examples of such carabiners are known from EP-A-1 384 497.

An aim of this invention is to provide a carabiner with a rolling element that is more versatile than known carabiners with rollers.

To this end, from a first aspect, this invention provides a carabiner having a body that extends in a median plane, the body having end portions between which is defined an opening; a gate carried on one of the end portions that can be moved to open or close the opening; a sheave carried on the body for rotation about an axis that lies within or parallel to the median plane; and an aperture, adjacent to the sheave, that extends through the body in a direction that is parallel or which has a component parallel to the axis of rotation of the sheave.

This arrangement causes an element carried on the sheave to be spatially separated from an element passing through the aperture because the carabiner urges them to extend in planes that are approximately at right angles. This minimises the chance that these elements will interfere with one another when moving with respect to one another or with respect to the carabiner.

Preferably, the aperture is of sufficient size to accommodate a rope or another carabiner. The actual size may be determined by the load that a specific embodiment is intended to carry, and it may scale with the overall size of the embodiment. However, it may be that the aperture can accommodate an element of at least 5mm in diameter, 10mm in diameter, 15mm in diameter or 20mm in diameter.

The gate is typically pivotally connected to an end portion of the body such that it can pivot about an axis that is normal to the axis of rotation of the sheave. In a typical embodiment, the sheave is disposed between the gate and the aperture.

The body may include a boss through which the aperture is formed.

Embodiments of the invention may include two sheaves disposed to opposite sides of the opening. Such embodiments may have two apertures, each adjacent to a respective sheave, and each of which extends through the body in a direction that is parallel to the axis of rotation of the adjacent sheave. The axes of rotation of the sheaves are typically, but not necessarily, parallel to one another.

In an alternative arrangement, a carabiner embodying the invention may have two sheaves adjacent to one another. In such cases, the axes of rotation of the sheaves may be coaxial. From a second aspect, this invention provides a rigging system comprising a carabiner embodying the invention from its first aspect and a rope that passes over at least one sheave of the carabiner, which rope cooperates with at least one other component, and which rope is connected to the aperture of the carabiner.

The rope may be connected to the aperture by sewing or tying. Alternatively, the rope may be connected to the aperture by an intermediate connector (e.g., a carabiner or a snap hook) that passes through the aperture. The other component may include one or more of a pulley, a carabiner that incorporates a sheave, or a further carabiner being an embodiment of this invention.

Embodiments of the invention will now be described in detail, by way of example, and with reference to the accompanying drawings, in which:
Figures 1 to 3 are views of a carabiner being a first embodiment of the invention;
Figure 4 shows the embodiment of Figures 1 to 3 with a captive bar removed;
Figure 5 shows the embodiment of Figures 1 to 3 with the gate open;
Figures 6 and 7 are views of a second embodiment of the invention;
Figures 8 and 9 are views of a third embodiment of the invention; and
Figures 10 and 11 show the embodiments of Figures 1 to 5 in use in a rigging system.

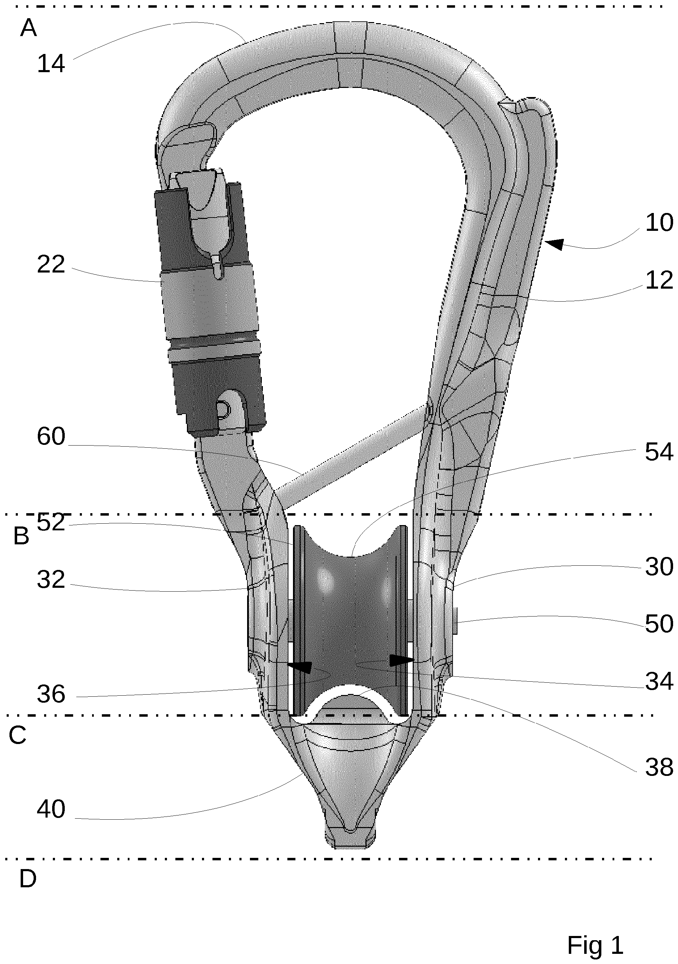

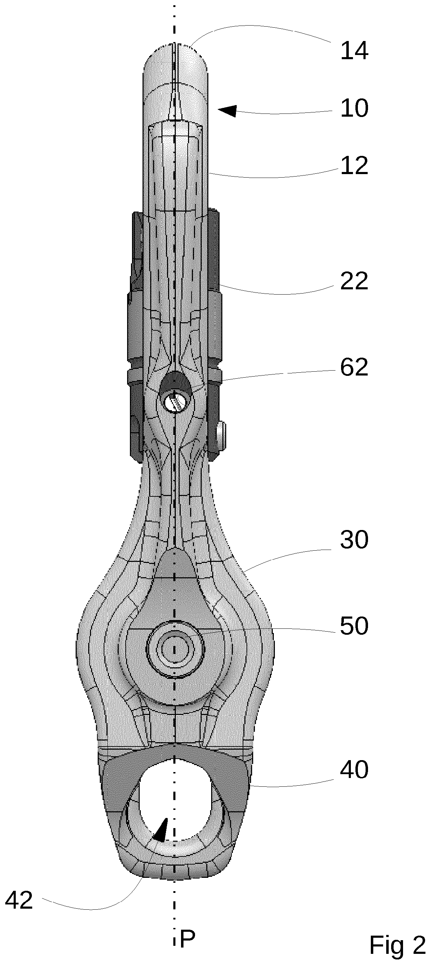

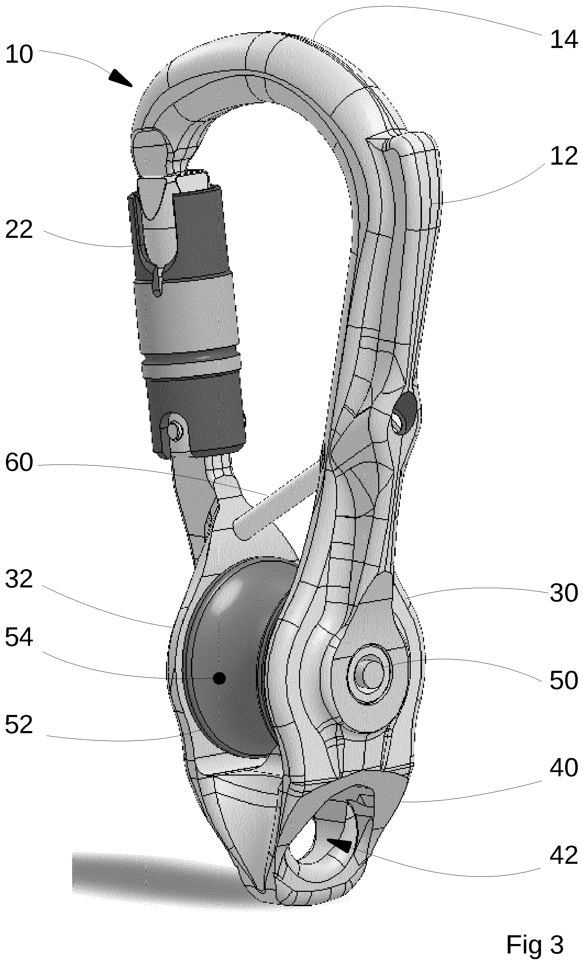

With reference to Figures 1 to 3, a carabiner includes a body 10 formed as a single alloy forging or casting. (Alternative embodiments might be formed from steel, and could be machined from a solid billet.) To assist in the understanding of the function and disposition of the body 10, for the purpose of this description it will be divided into three hypothetical regions; an upper region between lines A and B in Figure 1, a middle region between lines B and C in Figure 1, and a lower region between lines C and D in Figure 1. The body is substantially symmetrical about a median plane P, shown in Figure 2 and corresponding to the Z-axis (that is, directly away from the viewer) of Figure 1.

With the exception of mounting formations for the captive bar, which will be described below, the upper region of the body 10 resembles closely to the corresponding part of a conventional carabiner, so will be described only briefly. In the upper region, the body 10 comprises an approximately C-shaped loop, having a back 12 and a curved end portion 14. The upper region has an opening 18 through which a rope or similar item can pass through the opening 18 into the upper region of the body 10.

The middle region comprises two substantially parallel legs 30, 32, having mutually-facing surfaces 34, 36 that are approximately flat and parallel. The middle region is of greater depth in the Z-direction of Figure 1 than the upper region. A respective aperture of circular section is formed through each leg 30, 32, the middle region, the apertures being coaxial and lying within the median plane P.

In the lower region, the two legs 30, 32 are joined by a boss 40. A becket aperture 42 passes through the boss 40, extending in a direction that is generally parallel to the axis of the apertures in the middle region, and the median plane P. A projection 38 extends from the boss towards the middle region.

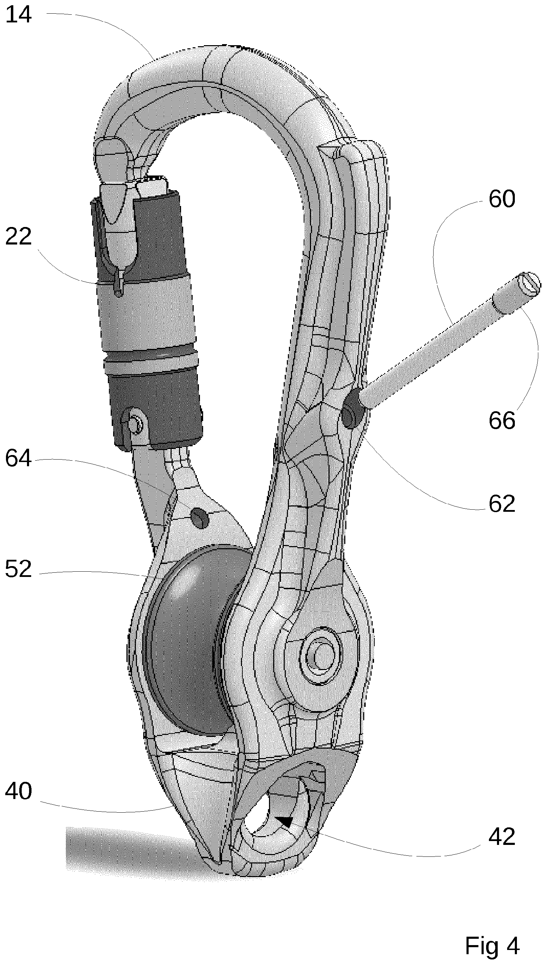

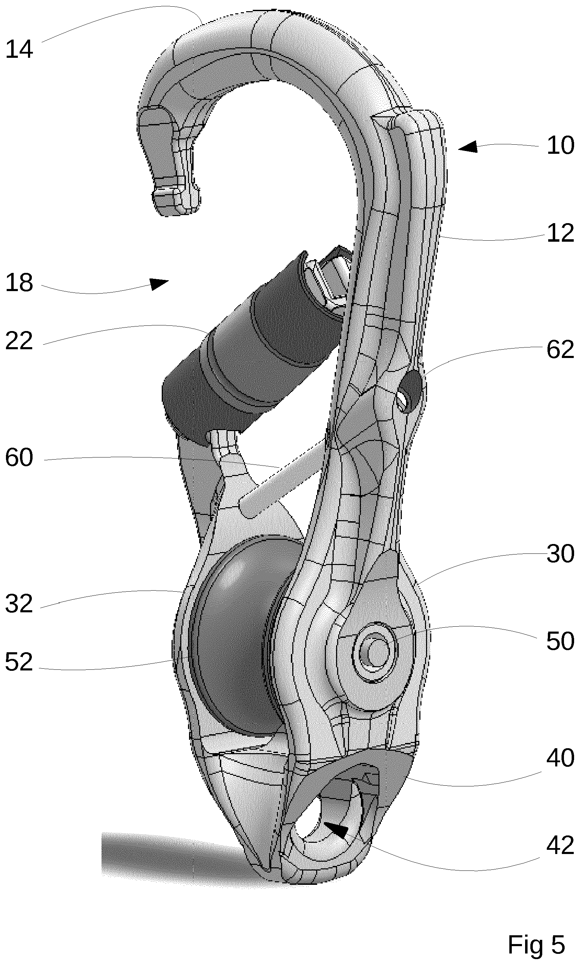

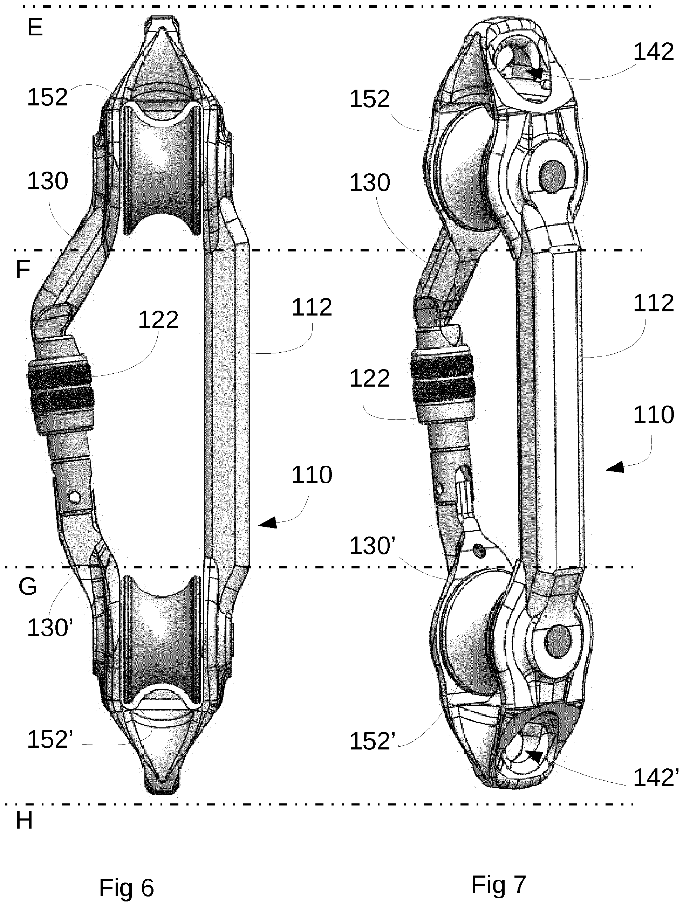

The carabiner further includes a gate 22 that is carried on the upper region 10. The gate 22 is biased to pivot towards a closed position (Figs 1 to 4) in which it completely closes the opening 18 thus which forms a continuous loop in the upper region. Upon release of a locking mechanism, the gate 22 can be pivoted towards an open position (Figs 5 and 6), in which the opening is partially unobstructed. As is well known to those in the technical field, there exists a very large range of alternative gates and locking arrangements, many of which will be suitable for use in embodiments of the invention. Also, as shown, the gate is pivoted close to the end closer to the intermediate region. However, it could alternatively be reversed and pivoted further from the intermediate region.

An axle 50 is provided at the middle section. The axle 50 passes through the apertures in the middle region, and is retained there by being riveted within the apertures. A sheave 52 is carried on the axle 50, the sheave 52 including a rolling-element bearing or a bushing to enable it to rotate freely upon the axle 50. The depth of the middle region of the body is sufficiently great that it encloses the sheave 52 is entirely between the mutually-facing surfaces 34, 36 of the middle region. The sheave 52 has an outer surface 54 with which a rope can make contact, the outer surface 54 being concave in profile to guide the rope towards the centre of the sheave 52. The projection 38 is close to the outer surface 54 of the sheave 52 to prevent a rope being passed between the sheave 52 and the boss 40.

A captive bar 60 is provided at the upper region. Mounting formations for the captive bar 60 are provided in the upper region. These include a counterbored, threaded hole 62 that extends through the back 12 and a hole 64 between the opening 18 and the middle region. The counterbored hole 64 and the hole 62 are coaxial, in the median plane P, and angled at approximately 30° to the axle 50. The captive bar 60 has a head 66 having a drive slot and a threaded portion close to the head. The captive bar 60 can be inserted through the threaded hole 62 in the back 12 such that the threaded portion enters the hole 64. It can be tightened in place using a suitable tool engaged with the drive slot in the head 66.

Specific features of this embodiment include:
- a rope or other element passing over the sheave 52 can be prevented from parting from the sheave and prevented from being removed from the carabiner when the gate 22 is open by the captive bar 60;
- the becket aperture 42 extends generally parallel to the axis of rotation of the sheave 52, which means that an element over the sheave 52 is unlikely to interfere with an element passing through the becket aperture 42 because they will tend to extend in a substantially different orientation to one another;
- the becket aperture 42 is preferably made to be sufficiently large to allow the body of a carabiner to pass through it - for instance it may be in excess of 25mm or 30mm; and
- ends of the becket aperture 40 are formed with a curved, tapering entrance to ensure smooth passage of a rope or other flexible element.

A second embodiment of the invention is shown in Figures 6 and 7. As with the first embodiment, for the purpose of this description this alternative embodiment will be divided into three hypothetical regions; an upper region between lines E and F in Figures 6 and 7, a middle region between lines F and G in Figure 6 and 7, and a lower region between lines G and H in Figure 6 and 7.

The lower region of this embodiment is essentially the same as the combined lower and middle regions of the first embodiment. The upper region of this embodiment is essentially the same as its lower region, except that it is inverted. Thus, the second embodiment has two sheaves 152, 152' and two corresponding becket apertures 142, 142'.

The body 110 of this embodiment has a back 112 that interconnects the first and the third regions. Opposite the back, an upper leg 130 that extends from the upper region towards the lower region, and a lower leg 130' extends from the lower region towards the upper region. An opening is defined between the upper and lower legs 130, 130'. A gate 122 is carried on the lower leg 130' to pivot in the median plane of the carabiner. In a closed position, the gate 122 makes contact with the upper leg 130, thereby closing the opening. Upon manipulation of a locking mechanism, gate 122 can be displaced against a resilient biasing force to partially open the opening between the upper and lower legs 130, 130' such that a rope can pass through the opening to be enclosed within the body 110.

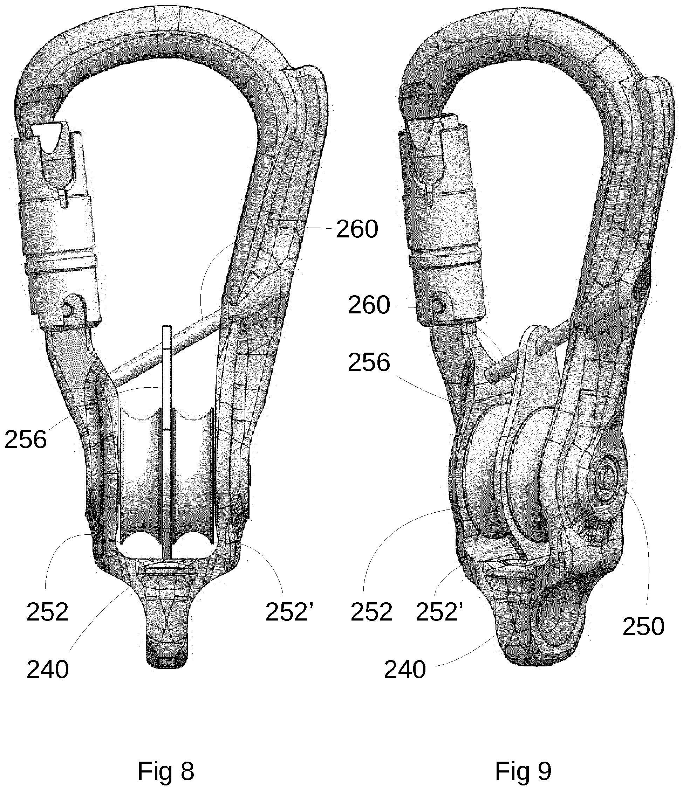

A third embodiment is shown in Figures 8 and 9. This embodiment is a variation of the first embodiment, the significant difference is that two sheaves 252, 252' are carried on the axle 250, the sheaves being capable of rotation on the axle 250 independently of one another. In this embodiment, the sheaves 252, 252' are of similar size, but this is not essentially so. A divider plate 256 passes between the sheaves 252, 252'. One end of the divider plate is received in a slot in the boss 240. From there, it extends between the sheaves 252, 252', where it has a hole through which the axle 250 passes, and a further hole through which the captive bar 260 passes. The plate 256 and the captive bar 260 create two separate passages through which a rope can pass over a respective one of the sheaves 252, 252'.

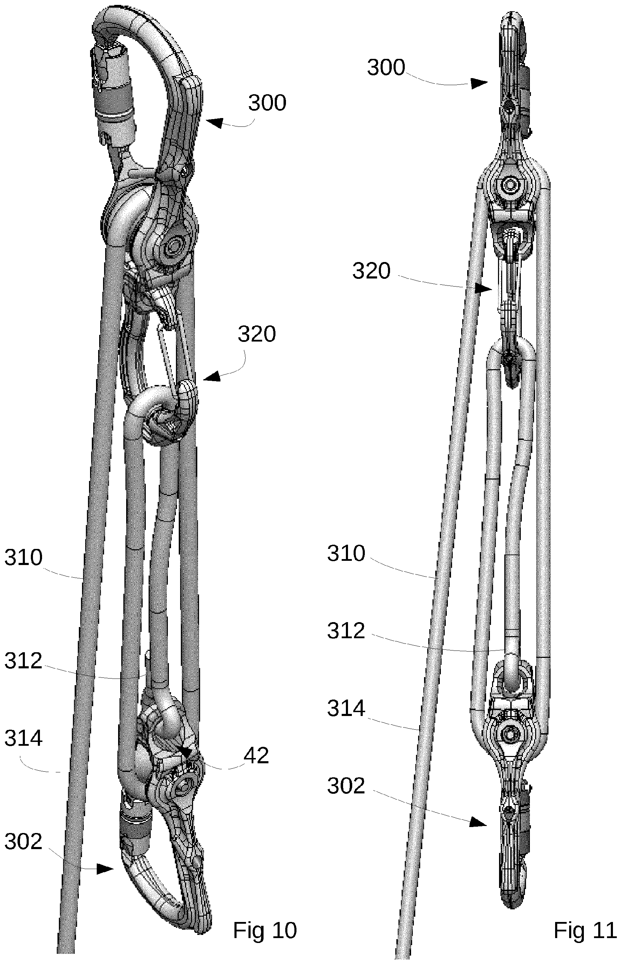

A carabiner embodying this invention is typically used as part of a rigging system in combination with other functional components and an interconnecting rope. An example, shown in Figures 10 and 11, is a lifting system that offers a mechanical advantage. The body of a first carabiner 300 similar to the first embodiment of the invention is suspended from a fixed anchorage (not shown) with its body extending upward from the aperture 42. An end portion 310 of a rope 312 is secured through the aperture 42 of a second carabiner 302 similar to the first embodiment of the invention, by sewing, tying or by an intermediate carabiner or other connector, the body extending downwardly from the aperture 42. The rope extends from a termination in the aperture 42 of the second carabiner 302 upwardly to a pass over a sheave of a link 320 of the type disclosed in GB-A-2391902. From there, it extends downward to pass around the sheave of the second carabiner 302. From there, it extends up to pass over the sheave of the first carabiner 300. From there, a free length 314 of the rope extends. A load to be lifted is connected to the second carabiner 302. A downward pull on the free length of the rope causes the load attached to the second carabiner 302 to be lifted with a 2:1 mechanical advantage.

Note that the first carabiner could be replaced by a carabiner similar to the third above-described embodiment of the invention that has two sheaves. In that case, the snap link 320 can be omitted, and the rope is instead looped over a sheave of the first carabiner.

## Claims

1. A carabiner having:
a. a body (10) that extends in a median plane, the body having end portions between which is defined an opening (18);
b. a gate (22) carried on one of the end portions that can be moved to open or close the opening (18);
c. a sheave (52) carried on the body for rotation about an axis that lies within or parallel to the median plane; and
d. an aperture (42), adjacent to the sheave(52), that extends through the body **characterised in that**
e. the aperture (42) extends in a direction that is parallel to the axis of rotation of the sheave (52).

2. A carabiner according to claim 1 in which aperture can accommodate an element of at least 10mm in diameter.

3. A carabiner according to claim 1 or claim 2 in which the gate (22) is pivotally connected to an end portion of the body such that it can pivot about an axis that is normal to the axis of rotation of the sheave (52).

4. A carabiner according to any preceding claim in which the sheave (52) is disposed between the gate (22) and the aperture (42).

5. A carabiner according to any preceding claim in which the body (10) includes a boss (40) through which the aperture is formed.

6. A carabiner according to any preceding claim having two sheaves (152, 152') disposed to opposite sides of the opening.

7. A carabiner according to claim 6 having two apertures (142, 142'), each being adjacent to a respective sheave, and each of which extends through the body in a direction that is parallel to the axis of rotation of the adjacent sheave.

8. A carabiner according to claim 6 or claim 7 in which the axes of rotation of the sheaves are parallel to one another.

9. A carabiner according to any one of claims 1 to 5 having two sheaves adjacent (252, 252') to one another.

10. A carabiner according to claim 9 in which the axes of rotation of the sheaves are coaxial.

11. A rigging system comprising a carabiner (300, 302) according to any preceding claim and a rope (310) that passes over at least one sheave of the carabiner, which rope cooperates with at least one other component, and which rope is connected to the aperture of the carabiner.

12. A rigging system according to claim 11 in which the rope is connected to the aperture by sewing or tying.

13. A rigging system according to claim 11 in which the rope is connected to the aperture by an intermediate connector (320) that passes through the aperture.

14. A rigging system according to any one of claims 11 to 13 in which the other component includes one or more of a pulley, a carabiner that incorporates a sheave, or a further carabiner according to any one of claims 1 to 10.

## Patentansprüche

1. Karabiner, der Folgendes aufweist:
a. einen Körper (10), der sich in einer Medianebene erstreckt, wobei der Körper Endabschnitte aufweist, zwischen denen eine Öffnung (18) definiert ist;
b. einen Schieber (22), der auf einem der Endabschnitte getragen wird und bewegt werden kann, um die Öffnung (18) zu öffnen oder zu schließen;
c. eine Scheibe (52), die auf dem Körper getragen wird, um sich um eine Achse zu drehen, die in oder parallel zur Medianebene liegt; und
d. eine Öffnung (42), die an der Scheibe (52) angrenzt und sich durch den Körper erstreckt, **dadurch gekennzeichnet, dass**
e. die Öffnung (42) sich in einer Richtung erstreckt, die parallel zur Drehachse der Scheibe (52) ist.

2. Karabiner nach Anspruch 1, wobei die Öffnung ein Element mit einem Durchmesser von mindestens 10 mm aufnehmen kann.

3. Karabiner nach Anspruch 1 oder Anspruch 2, wobei der Schieber (22) schwenkbar mit einem Endabschnitt des Körpers verbunden ist, so dass er um eine Achse schwenken kann, die senkrecht zur Drehachse der Scheibe (52) ist.

4. Karabiner nach einem der vorstehenden Ansprüche, wobei die Scheibe (52) zwischen dem Schieber (22) und der Öffnung (42) angeordnet ist.

5. Karabiner nach einem der vorstehenden Ansprüche, wobei der Körper (10) einen Aufsatz (40) enthält, durch den die Öffnung geformt ist.

6. Karabiner nach einem der vorstehenden Ansprüche mit zwei Scheiben (152, 152'), die an gegenüberliegenden Seiten der Öffnung angeordnet sind.

7. Karabiner nach Anspruch 6 mit zwei Öffnungen (142, 142'), die jeweils an eine jeweilige Schreibe angrenzen, und wobei sich jede durch den Körper in einer Richtung erstreckt, die parallel zur Drehachse der angrenzenden Scheibe ist.

8. Karabiner nach Anspruch 6 oder Anspruch 7, wobei die Drehachsen der Scheiben parallel zueinander sind.

9. Karabiner nach einem der Ansprüche 1 bis 5 mit zwei aneinander angrenzenden Scheiben (252, 252').

10. Karabiner nach Anspruch 9, wobei die Drehachsen der Scheiben koaxial sind.

11. Verspannungssystem, umfassend einen Karabiner (300, 302) nach einem der vorstehenden Ansprüche, und ein Seil (310), das über mindestens eine Scheibe des Karabiners läuft, wobei das Seil mit mindestens einer anderen Komponente zusammenwirkt und welches Seil mit der Öffnung des Karabiners verbunden ist.

12. Verspannungssystem nach Anspruch 11, wobei das Seil durch Nähen oder Binden mit der Öffnung verbunden ist.

13. Verspannungssystem nach Anspruch 11, wobei das Seil durch einen Zwischenverbinder (320), der durch die Öffnung läuft, mit der Öffnung verbunden ist.

14. Verspannungssystem nach einem der Ansprüche 11 bis 13, wobei die andere Komponente eines oder mehrere einer Laufrolle, eines Karabiners, der eine Scheibe beinhaltet, oder eines weiteren Karabiners nach einem der Ansprüche 1 bis 10 enthält.

## Revendications

1. Mousqueton possédant :
a. un corps (10) qui s'étend sur un plan médian, le corps possédant des parties d'extrémité entre lesquelles est définie une ouverture (18) ;
b. un doigt (22) porté sur l'une des parties d'extrémité qui peut être déplacé pour ouvrir ou fermer l'ouverture (18) ;
c. un réa (52) porté sur le corps pour rotation selon un axe qui se situe dans ou en parallèle au plan médian ; et
d. une ouverture (42), adjacente au réa (52), qui s'étend à travers le corps **caractérisé en ce que**
e. l'ouverture (42) s'étend dans une direction qui est parallèle à l'axe de rotation du réa (52).

2. Mousqueton selon la revendication 1, dans lequel l'ouverture peut recevoir un élément d'au moins 10 mm de diamètre.

3. Mousqueton selon la revendication 1 ou 2, dans lequel le doigt (22) est raccordé de manière pivotante à une partie d'extrémité du corps de façon à ce qu'il puisse pivoter selon un axe qui est normal par rapport à l'axe de rotation du réa (52).

4. Mousqueton selon l'une quelconque des revendications précédentes, dans lequel le réa (52) est disposé entre le doigt (22) et l'ouverture (42).

5. Mousqueton selon l'une quelconque des revendications précédentes, dans lequel le corps (10) inclut un bossage (40) à travers lequel l'ouverture est formée.

6. Mousqueton selon l'une quelconque des revendications précédentes, possédant deux réas (152, 152') disposés sur des côtés opposés de l'ouverture.

7. Mousqueton selon la revendication 6, possédant deux ouvertures (142, 142'), chacune étant adjacente à un réa respectif, et chacune desquelles s'étend à travers le corps dans une direction qui est parallèle à l'axe de rotation du réa adjacent.

8. Mousqueton selon la revendication 6 ou 7, dans lequel les axes de rotation des réas sont parallèles l'un à l'autre.

9. Mousqueton selon l'une quelconque des revendications 1 à 5, possédant deux réas adjacents (252, 252') l'un à l'autre.

10. Mousqueton selon la revendication 9, dans lequel les axes de rotation des réas sont coaxiaux.

11. Système de levage comprenant un mousqueton (300, 302) selon l'une quelconque des revendications précédentes et une corde (310) qui passe sur au moins un réa du mousqueton, laquelle corde coopère avec au moins un autre composant, et laquelle corde est raccordée à l'ouverture du mousqueton.

12. Système de levage selon la revendication 11, dans lequel la corde est raccordée à l'ouverture par une couture ou un noeud.

13. Système de levage selon la revendication 11, dans lequel la corde est raccordée à l'ouverture par un raccord intermédiaire (320) qui passe à travers l'ouverture.

14. Système de levage selon l'une quelconque des revendications 11 à 13, dans lequel l'autre composant inclut l'un ou plusieurs parmi une poulie, un mousqueton qui intègre un réa, ou un mousqueton supplémentaire selon l'une quelconque des revendications 1 à 10.
